# FASCICULE DE BREVET EUROPEEN

(11) **EP 3 931 046 B1**
(45) Date de publication et mention de la délivrance du brevet: **12.04.2023**
(21) Numéro de dépôt: 20701591.8
(22) Date de dépôt: 22.01.2020
(51) Int. Cl.: B60R 1/00

(54) **PROCÉDÉ D'AFFICHAGE D'UN ENVIRONNEMENT VÉHICULE**
VERFAHREN ZUR ANZEIGE EINER FAHRZEUGUMGEBUNG
METHOD FOR DISPLAYING A VEHICLE ENVIRONMENT

(30) Priorité: 25.02.2019 FR 1901866
(43) Date de publication de la demande: 05.01.2022
(73) Titulaire: Renault s.a.s, 92100 Boulogne Billancourt (FR)
(72) Inventeur: PUAGNOL, Christelle, 78180 Montigny le bretonneux (FR); ANCILLON, Guillaume, 78550 Houdan (FR)
(74) Mandataire: Renault Group
(86) Numéro de dépôt international: PCT/EP2020/051469
(87) Numéro de publication internationale: WO 2020/173621

(56) Documents cités:
- DE-A1-102014 016 612
- US-A1- 2017 151 909

## Description

L'invention concerne le domaine des dispositifs de vision et procédés d'affichage permettant à un utilisateur de véhicule, en particulier un conducteur, de voir un environnement du véhicule qui n'est pas dans son champ de vision.

Il est connu de l'état de la technique les véhicules comprenant un rétroviseur latéral comprenant deux miroirs, un premier miroir reflétant une vue latérale arrière lointaine et orientée vers le sol de l'environnement et un deuxième miroir reflétant une vue latérale arrière plus panoramique de l'environnement, permettant de couvrir l'angle mort du premier miroir.

Il est également connu un véhicule comprenant un écran central informant un utilisateur sur un environnement du véhicule, par exemple sur la présence de cibles et leur localisation par rapport au véhicule. Un tel écran ne propose pas une vue de l'environnement réel mais plutôt des pictogrammes disposés sur une cartographie virtuelle de l'environnement.

Il est également connu de remplacer un rétroviseur latéral par un système comprenant une caméra et un afficheur. L'afficheur reproduit alors les vues des rétroviseurs à miroirs par différentes vues, déformées ou non, de la caméra. Certains afficheurs proposent un affichage modifié dans le cadre d'une manoeuvre de stationnement, pour aider le conducteur à se garer, par une inclinaison de la caméra vers le sol.

US 2017/151909 A1 divulgue un procédé d'affichage d'un environnement d'un véhicule selon le préambule de la revendincation 1.

Les afficheurs connus de l'état de la technique ne sont pas flexibles, paramétrables et adaptatifs à l'environnement.

L'invention propose un nouveau procédé d'affichage d'un environnement véhicule permettant de résoudre les problèmes de l'état de la technique.

L'invention porte sur un procédé d'affichage d'un environnement d'un véhicule, le véhicule comprenant une caméra de rétrovision latérale comportant un champ de vision couvrant un environnement arrière latéral par rapport à un conducteur du véhicule, le véhicule comprenant en outre une caméra de côté comportant un champ de vision transversal par rapport au véhicule, un calculateur et un afficheur, le procédé comprenant les étapes suivantes :
- une étape d'affichage arrière, dans laquelle le calculateur affiche sur une première zone de l'afficheur une vue non déformée de la caméra de rétrovision latérale selon un premier facteur d'agrandissement et sur une deuxième zone de l'afficheur une vue déformée de la caméra de rétrovision latérale selon un deuxième facteur d'agrandissement, différent du premier facteur d'agrandissement,
- une étape de détection dans laquelle le calculateur détecte une condition de changement d'affichage,
- une étape d'affichage étendu, dans laquelle le calculateur affiche sur la deuxième zone de l'afficheur une vue de la caméra de côté.

Selon un aspect de l'invention, le champ de vision de la caméra de rétrovision latérale couvre en outre le long du véhicule.

Selon un aspect de l'invention, la détection de condition de changement d'affichage correspond à une détection d'une demande d'un utilisateur du véhicule.

Selon un aspect de l'invention, la détection de condition de changement d'affichage correspond à une détection d'intersection, par le véhicule.

Selon un aspect de l'invention, la détection d'intersection comprend une reconnaissance par un capteur ou une détection par un dispositif de cartographie, d'une intersection routière, ou une reconnaissance par un capteur d'une cible susceptible d'être localisée dans le champ de vision de la caméra de côté dans un délai prédéterminé compris entre zéro et dix secondes ou dans une distance prédéterminée comprise entre zéro et dix mètres.

Selon un aspect de l'invention, la détection de condition de changement d'affichage est conditionnée à une probabilité de collision du véhicule avec une cible.

Selon un aspect de l'invention, la probabilité de collision du véhicule avec une cible comprend au moins un parmi un indice de confiance d'une cible détectée par le véhicule, un temps à la collision entre le véhicule et une cible détectée par le véhicule, un taux d'accidentologie d'un lieu géographique comprenant l'environnement du véhicule.

Selon un aspect de l'invention, le calculateur affiche, dans l'étape d'affichage étendu, une vue déformée de la caméra de côté.

Selon un aspect de l'invention, la détection de condition de changement d'affichage comprend à la détection d'un lieu géographique prédéterminé correspondant à une localisation du véhicule et à un paramétrage d'un utilisateur en lien avec ladite localisation du véhicule.

Selon un aspect de l'invention, le procédé comprend en outre une étape de signalisation dans laquelle le calculateur informe un utilisateur du véhicule d'un changement d'affichage sur l'afficheur, par des moyens de signalisation.

Selon un aspect de l'invention, l'étape de signalisation est conditionnée à une détection d'un champ de vision de l'utilisateur excluant l'afficheur.

L'invention porte également sur un véhicule comprenant une caméra de rétrovision latérale comportant un champ de vision couvrant un environnement arrière latéral par rapport à un conducteur du véhicule, le véhicule comprenant en outre une caméra de côté comportant un champ de vision transversal par rapport au véhicule, un calculateur et un afficheur, le calculateur étant apte à exécuter les étapes du procédé d'affichage selon l'une quelconque des revendications précédentes.

D'autres avantages et caractéristiques de l'invention apparaîtront à la lecture de la description et des dessins.
La figure 1a illustre un véhicule équipé d'une caméra de rétrovision latérale.
La figure 1b illustre un véhicule équipé d'une caméra de côté.
La figure 2 représente les étapes du procédé selon l'invention.
La figure 3 illustre un affichage arrière et les champs de vision correspondants de la caméra de rétrovision latérale.
La figure 4a illustre un véhicule et une cible détectée par le véhicule.
La figure 4b illustre un véhicule et une intersection routière détectée par le véhicule.
La figure 5 illustre un affichage étendu et les champs de vision de caméras correspondants.

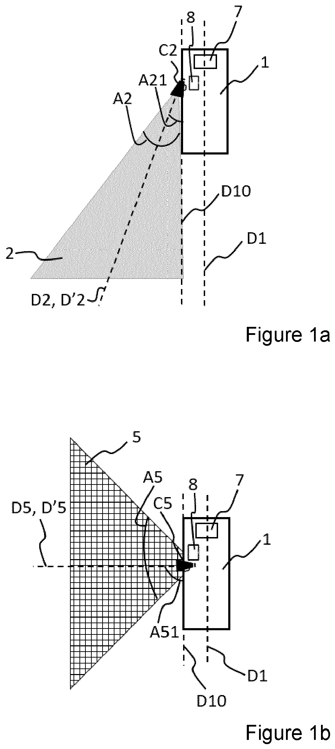

Les figures 1a et 1b illustrent un véhicule 1 comprenant une caméra de rétrovision latérale C2, une caméra de côté C5, un calculateur 7 et un afficheur 8.

La caméra de rétrovision latérale C2 est une caméra dont le champ de vision 2 correspond ou inclut sensiblement un champ d'un miroir d'un rétroviseur latéral de l'état de la technique.

Une caméra de rétrovision est une caméra dont le champ de vision couvre un environnement de véhicule qui correspond à ce qui se passe derrière un conducteur de véhicule.

Le champ de vision 2 de la caméra de rétrovision latérale C2 couvre un environnement arrière du véhicule 1 par rapport au conducteur, ainsi que le long du véhicule 1, du côté du véhicule 1 duquel la caméra de rétrovision latérale C2 est disposée.

Le champ de vision 2 de la caméra de rétrovision latérale C2 permet un affichage au conducteur du véhicule 1, sur l'afficheur 8, d'une vue de la caméra de rétrovision latérale C2, lui permettant de surveiller, de son siège, la route sur le côté vers l'arrière du véhicule 1 quel que soit le chargement normal du véhicule 1, et dont le champ de visibilité ne comporte pas d'angle mort notable susceptible de masquer une cible s'apprêtant à dépasser ledit véhicule 1.

Une cible est par exemple un véhicule, un camion, un vélo, une moto, un piéton, un cheval, une trottinette.

La caméra de rétrovision latérale C2 est généralement localisée sur un côté du véhicule 1, près d'une portière avant, sensiblement en lieu et place d'un rétroviseur latéral de l'état de la technique.

De préférence, la caméra de rétrovision latérale C2 comprend, selon son propre référentiel, un angle de vision A2 horizontal compris entre 45 degrés et 75 degrés.

De préférence, la caméra de rétrovision latérale C2 comprend, selon son propre référentiel, un angle de vision vertical compris entre 40 degrés et 80 degrés.

La direction longitudinale D1 du véhicule 1 est la projection d'une droite passant par le centre des essieux avant et arrière du véhicule, dans le plan général du châssis du véhicule 1.

Le plan général du châssis du véhicule 1 est sensiblement parallèle à un plan de sol sur lequel repose les quatre roues du véhicule 1.

La caméra de rétrovision latérale C2 est orientée selon un axe optique D2 dont la projection D'2 dans le plan général du châssis du véhicule 1 fait un angle de rétrovision A21 compris entre 20 degrés et 45 degrés, avec la direction longitudinale D1 du véhicule 1. Sur la figure 1a, l'angle de rétrovision A21 est représenté par rapport à une droite D10 située dans le plan général du châssis du véhicule 1 et parallèle à la direction longitudinale D1 du véhicule 1, pour plus de visibilité.

L'axe optique D2 de la caméra de rétrovision latérale C2 fait un angle compris entre -10 degrés et 10 degrés, avec le plan du châssis du véhicule 1.

La caméra de côté C5 est une caméra dont le champ de vision 5 est transversal par rapport au véhicule 1, la caméra de côté C5 étant orientée par exemple sensiblement perpendiculairement par rapport à la direction longitudinale D1 du véhicule 1.

La caméra de côté C5 comprend, selon son propre référentiel, un angle de vision A5 horizontal supérieur à 120 degrés et de préférence sensiblement égal à 180 degrés.

La caméra de côté C5 comprend, selon son propre référentiel, un angle de vision vertical supérieur à 145 degrés et de préférence sensiblement égal à 150 degrés.

La caméra de côté C5 est orientée selon un axe optique dont la projection D'5 dans le plan général du châssis du véhicule 1 fait un angle de côté A51 compris entre 80 degrés et 95 degrés, avec la direction longitudinale D1 du véhicule 1. Sur la figure 1a, l'angle de rétrovision A21 est représenté par rapport à une droite D10 située dans le plan général du châssis du véhicule 1 et parallèle à la direction longitudinale D1 du véhicule 1, pour plus de visibilité.

La caméra de côté C5 est généralement localisée sur un côté du véhicule 1, près d'une portière avant, près de la caméra de rétrovision latérale C2.

L'axe optique D5 de la caméra de rétrovision latérale C2 est dirigé vers le plan du châssis du véhicule 1. L'axe optique D5 de la caméra de rétrovision latérale C2 fait un angle compris entre 35 degrés et 55 degrés, avec le plan du châssis du véhicule 1.

De préférence les champs de vision 2, 5 des caméras de rétrovision latérale C2 et de côté C5 se recouvrent en partie afin d'éviter qu'une zone de l'environnement du véhicule 1 soit non couverte entre les deux champs de vision 2, 5.

L'afficheur 8 permet l'affichage d'une ou plusieurs vues d'une ou des deux caméras de rétrovision latérale C2 et de côté C5.

Avantageusement, l'afficheur 8 comprend deux zones d'affichage.

L'afficheur 8 est généralement localisé dans l'habitacle du véhicule 1, du même côté du véhicule 1 que les caméras de rétrovision latérale C2 et de côté C8 qui lui sont associées.

Le calculateur 7 gère l'affichage de vues d'une ou des deux caméras de rétrovision latérale C2 et de côté C5.

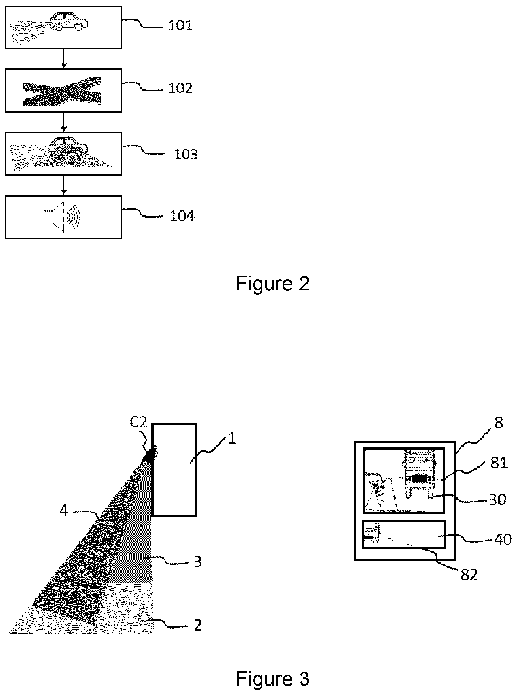

La figure 2 illustre les étapes d'un procédé d'affichage d'un environnement

Selon une étape d'affichage arrière 101, le calculateur 7 affiche sur une première zone de l'afficheur une vue non déformée de la caméra de rétrovision latérale C2 selon un premier facteur d'agrandissement et sur une deuxième zone de l'afficheur une vue déformée de la caméra de rétrovision latérale C2 selon un deuxième facteur d'agrandissent, différent du premier facteur d'agrandissement.

Selon une étape de détection 102, le calculateur 7 détecte une condition de changement d'affichage.

La détection de condition de changement d'affichage correspond par exemple à une détection d'une demande d'un utilisateur du véhicule.

L'utilisateur, au moyen d'une commande vocale, mécanique ou tactile, demande au calculateur 7 un changement d'affichage.

Par exemple, à la sortie d'un garage d'une propriété privée, le conducteur peut demander au calculateur 7 un changement d'affichage pour une meilleure visibilité de son environnement transversal.

Selon un autre exemple, une détection de condition de changement d'affichage correspond à la détection d'un lieu géographique prédéterminé correspondant à une localisation du véhicule 1 et à un paramétrage d'un utilisateur en lien avec ladite localisation du véhicule 1. Un utilisateur du véhicule peut paramétrer un changement d'affichage en un lieu géographique prédéterminé. Chaque fois que le véhicule se trouve dans ou a proximité du lieu géographique prédéterminé, le calculateur 7 détecte une condition de changement d'affichage.

La détection de condition de changement d'affichage correspond par exemple à une détection d'intersection par le véhicule 1.

La détection d'intersection comprend au moins un parmi :
- une reconnaissance par un capteur ou une détection par un dispositif de cartographie, d'une intersection routière,
- une reconnaissance par un capteur d'une cible susceptible d'être localisée dans le champ de vision de la caméra de côté C5 dans une distance prédéterminée ou un délai prédéterminé.

De manière préférentielle, la distance prédéterminée est comprise entre zéro mètre et dix mètres. Le délai prédéterminé est compris entre zéro seconde et dix secondes.

Avantageusement, dans le cas d'une reconnaissance ou d'une détection d'une intersection routière, la détection de condition de changement d'affichage est conditionnelle à une proximité de l'intersection routière par rapport au véhicule 1 et à une probabilité de passage du véhicule 1 sur ladite intersection routière.

La probabilité de passage du véhicule 1 sur une intersection routière par rapport au véhicule 1 correspond à une prévision selon un parcours programmé ou probable, que le véhicule 1 va passer par ladite intersection routière.

La proximité de l'intersection routière par rapport au véhicule 1 correspond au passage du véhicule 1 sur ladite intersection routière dans une distance comprise entre zéro mètre et dix mètres ou dans un délai compris entre zéro seconde et dix secondes.

Une détection d'intersection routière est réalisée par une reconnaissance d'une intersection routière par une caméra, un radar, un lidar ou à partir de données d'un dispositif de cartographie.

Une intersection routière est :
- un carrefour routier,
- une intersection d'au moins deux routes,
- un rond-point,
- un croisement d'une route avec une sortie de garage, une aire de stationnement, un entrepôt, une propriété privée ou publique.

De manière générale, une intersection routière est une portion de route qui est susceptible d'être traversée au moins en partie par une cible en particulier un véhicule, et présentant donc un danger de collision du véhicule 1 avec ladite cible.

La reconnaissance d'une cible susceptible d'être localisée dans le champ de vision de la caméra de côté C5 peut être réalisée par un capteur tel qu'une caméra, un radar, un lidar ou par une association de plusieurs de ces capteurs.

De manière préférentielle, la condition de changement d'affichage est conditionnée à une probabilité de collision d'une cible avec le véhicule 1.

La probabilité de collision d'une cible avec le véhicule 1 comprend au moins un parmi :
- un indice de confiance d'une cible détectée,
- un temps à la collision entre le véhicule et une cible détectée,
- un taux d'accidentologie d'un lieu géographique comprenant l'environnement du véhicule 1.

Un indice de confiance est une note donnée à une cible, reflétant un niveau de confiance sur la détection et/ou la reconnaissance d'un type de cible par le véhicule 1. L'indice de confiance peut être lié au type de capteur qui a détecté la cible, à une redondance de détection de ladite cible par plusieurs capteurs ou dans le temps, à des conditions de visibilité, à l'environnement, à la météo...

Le temps à la collision entre le véhicule 1 et une cible détectée est calculé par un calculateur du véhicule 1 en fonction de la vitesse connue dudit véhicule 1, de la vitesse estimée de ladite cible, de la trajectoire connue ou estimée dudit véhicule 1 et de la trajectoire estimée de ladite cible.

Le taux d'accidentologie d'un lieu géographique est par exemple une donnée fournie par un serveur extérieur, mise à jour par un organisme de sécurité routière, par la police, les pompiers, un réseau de dépanneurs... Le serveur extérieur comprend une liste d'intersections routières ou de lieux géographiques à fort taux d'accidentologie.

Selon une étape d'affichage étendu 103, le calculateur 7 affiche sur la deuxième zone de l'afficheur une vue de la caméra de côté C5.

L'affichage d'une vue de la caméra de côté C5 remplace la vue déformée de la caméra de rétrovision latérale C2 selon le deuxième facteur d'agrandissent.

Avantageusement, la vue de la caméra de côté C5 affichée sur la deuxième zone de l'afficheur est une vue déformée, pour un rendu panoramique par exemple.

Selon une étape de signalisation 104 facultative, le calculateur 7 informe un utilisateur du véhicule, en particulier le conducteur, d'un changement d'affichage sur l'afficheur 8, par des moyens de signalisation.

Les moyens de signalisation peuvent être haptiques, par exemple comprendre une vibration du volant ou du siège du conducteur.

Les moyens de signalisation peuvent être visuels, par exemple comprendre l'apparition d'un voyant sur un tableau de bord, un pare-brise, une console centrale, un afficheur tête haute.

Les moyens de signalisation peuvent être sonores, par exemple comprendre l'émission d'une tonalité sonore ou d'un message vocal depuis des hauts parleurs du véhicule.

Les moyens de signalisation permettent au conducteur de prendre connaissance qu'un changement d'affichage, sur l'afficheur 8, vient d'être effectué, est en cours ou est à venir dans un temps prédéfini, par exemple inférieur à la seconde, et qu'à ce titre il peut tourner son regard vers l'afficheur 8, si tel n'est pas le cas, à bon escient.

De manière préférentielle, l'étape de signalisation 104 est conditionnée à une détection d'un champ de vision de l'utilisateur excluant l'afficheur 8.

En effet, il ne sert à rien d'informer un utilisateur d'un changement d'affichage sur l'afficheur 8 si l'utilisateur a déjà dans son champ de vision ledit afficheur 8. Des moyens de signalisations systématiques peuvent devenir une gêne pour l'utilisateur.

Ainsi, avantageusement, un capteur du véhicule, par exemple une caméra, détecte l'orientation des yeux du conducteur et en déduit un champ de vision du conducteur. Si l'afficheur 8 est inclus dans le champ de vision du conducteur, l'étape de signalisation 104 n'est pas exécutée. Si l'afficheur 8 est exclu du le champ de vision du conducteur, l'étape de signalisation 104 est exécutée.

Avantageusement, l'utilisateur peut inhiber l'exécution de l'étape de signalisation 104 au moyen d'un paramétrage de type « préférences utilisateur ».

L'étape de signalisation 104 peut être exécutée par le calculateur 7 juste avant l'étape d'affichage étendu 103, pour prévenir l'utilisateur du véhicule 1 d'un changement d'affichage imminent ou exécutée après l'étape d'affichage étendu 103, pour prévenir l'utilisateur d'un changement d'affichage effectif récent.

La durée d'un affichage étendu selon l'étape d'affichage étendu 103 peut être prédéterminée ou dépendre de paramètres tels que l'état du traffic, la prise en compte par le conducteur du véhicule 1, le mouvement d'une cible 6 détectée. De manière générale, dans des conditions standard de roulage, la durée d'un affichage étendu est comprise entre deux secondes et quinze secondes. Après l'écoulement de la durée d'un affichage étendu, une étape d'affichage arrière 101 est de nouveau exécutée.

La figure 3 illustre le véhicule 1, et l'afficheur 8 du véhicule 1 représenté séparément, le calculateur 7 affichant sur l'afficheur 8 un affichage arrière selon une étape d'affichage arrière 101.

L'afficheur 8 comporte une première zone 81 et une deuxième zone 82.

Sur la première zone 81 de l'afficheur 8, une vue 30 non déformée de la caméra de rétrovision latérale C2 selon un premier facteur d'agrandissement, est affichée.

Sur la deuxième zone 82 de l'afficheur, une vue 40 déformée de la caméra de rétrovision latérale C2 selon un deuxième facteur d'agrandissent, est affichée.

De préférence, le premier facteur d'agrandissement est compris entre 0,8 et 1,1 et le deuxième facteur d'agrandissement est compris entre 0,5 et 0,7.

Le champ de vision 2 de la caméra de rétrovision latérale C2 est réprésenté sur la figure 3.

La vue 30 de la caméra de rétrovision latérale C2 correspond à un sous-champ de vision 3 du champ de vision 2 de la caméra de rétrovision latérale C2.

Sur la figure 3, le sous champ de vision 3 de la caméra de rétrovision latérale C2 comprend un environnement comprenant une aile arrière du véhicule 1 et une voie adjacente à une voie de circulation du véhicule 1.

La vue 40 de la caméra de rétrovision latérale C2 correspond à un sous-champ de vision 4 du champ de vision 2 de la caméra de rétrovision latérale C2.

Sur la figure 3, le sous-champ de vision 4 de la caméra de rétrovision latérale C2 comprend un environnement comprenant principalement une voie voisine de la voie adjacente à la voie de circulation du véhicule 1.

De manère plus générale, les deux vues 30, 40 de la caméra de rétrovision latérale C2 corespondant aux deux sous champs de vision 3, 4 du champ de vision 2 de la caméra de rétrovision latérale C2, ont pour but de rendre compte à un conducteur d'un environnement de véhicule sous deux angles de vue différents, plus ou moins éloignés du véhicule 1.

Une vue 40 déformée de la caméra de rétrovision latérale C2 permet par exemple un affichage panoramique d'une vue arrière latérale de l'environnement du véhicule, par rapport au conducteur du véhicule 1.

Une vue 40 déformée de la caméra de rétrovision latérale C2 permet par exemple un affichage plus intuitif pour un conducteur du véhicule 1, en particulier mettant en évidence des cibles à éviter.

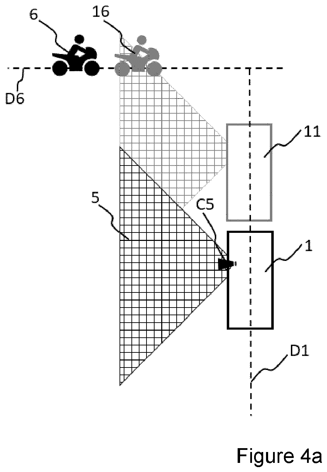

La figure 4a illustre un exemple de reconnaissance par un capteur, d'une cible 6 susceptible d'être localisée dans le champ de vision 5 de la caméra de côté C5 dans une distance comprise entre zéro mètre et dix mètres ou dans un délai compris entre zéro seconde et dix secondes.

La cible 6 est détectée par exemple par un lidar, un radar.

Selon une estimation de la trajectoire D6 et de la vitesse de la cible 6, la cible 6 sera dans la position 16 dans un délai de par exemple une seconde.

Dans ce même délai d'une seconde, le véhicule 1 qui suit une trajectoire selon sa direction longitudinale D1 sera dans la position 11.

Dans le délai d'une seconde, la cible 6 sera localisée dans le champ de vision 5 de la caméra de côté C5.

Le calculateur 7, en prenant en compte la détection de la cible 6 et le fait que ladite cible sera dans le champ de vision 5 de la caméra de côté C5, détecte une condition de changement d'affichage selon une étape de détection 102.

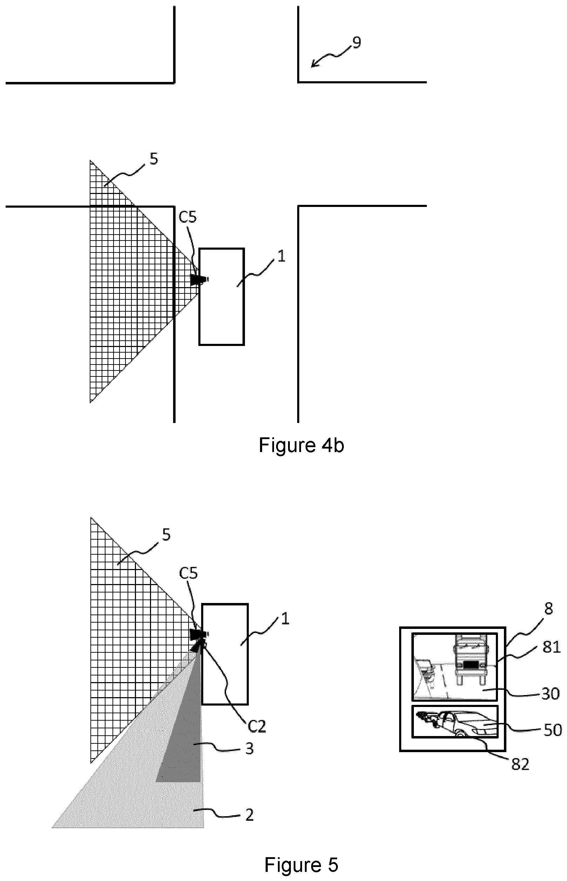

La figure 4b illustre un exemple de détection par un dispositif de cartographie, d'une intersection routière 9.

Par exemple, un dispositif de cartographie embarqué au véhicule 1 comprend des données de localisation d'intersections routières 9. Le calculateur 7 dispose dans une mémoire d'une liste d'intersections routières 9 à fort taux d'accidentologie qu'il a au préalable téléchargé depuis un serveur externe.

Le calculateur 7 sait que le véhicule 1 va traverser une intersection routière 9 car il connait le trajet du véhicule 1.

Le calculateur 7, sachant que le véhicule 1 va traverser dans un délai prédéterminé, par exemple une seconde, une intersection routière 9 à fort taux d'accidentologie, détecte une condition de changement d'affichage selon une étape de détection 102.

La figure 5 illustre le véhicule 1, et l'afficheur 8 du véhicule1 représenté séparément, le calculateur 7 affichant sur l'afficheur 8 un affichage étendu selon une étape d'affichage étendu 103.

Sur la première zone 81 de l'afficheur 8, la vue 30 non déformée de la caméra de rétrovision latérale C2 selon le premier facteur d'agrandissement, reste affichée et est inchangée.

Sur la deuxième zone 82 de l'afficheur 8, une vue 50 de la caméra de côté C5, est affichée.

Le champ de vision 5 de la caméra de côté C5 et le champ de vision 2 de la caméra de rétrovision latérale C2 sont réprésentés sur la figure 5.

La vue 50 de la caméra de côté C5 correspond au champ de vision 5 de la caméra de côté C5 ou à un sous-champ de vision du champ de vision 5, pouvant faire l'objet d'un traitement d'image afin de restituer une vue 50 facile à interpréter pour le conducteur et mettant en évidence des cibles à éviter ou focalisant sur une ou plusieurs voies de circulation.

De préférence, la vue 50 de la caméra de côté C5, est déformée pour fournir une vision de côté intuitive à comprendre pour le conducteur du véhicule 1 et mettant en évidence des cibles à éviter.

Le véhicule 1 comprend avantageusement deux ensembles de caméras de rétrovision arrière C2 et de côté C5, chaque ensemble de caméras arrière C2 et de côté C5 étant localisé de chaque côté du véhicule, près de la portière du conducteur et près de la portière du passager avant.

Le véhicule 1 comprend deux afficheurs, chaque afficheur 8 étant associé à un ensemble de caméras arrière C2 et de côté C5.

Le calculateur 7 exécute le procédé de l'invention sur un ou sur les deux afficheurs, ou même plus, en fonction du contexte environnemental, par exemple en fonction de la localisation d'une cible 6 détectée ou d'une configuration d'intersection routière 9.

## Revendications

1. Procédé d'affichage d'un environnement d'un véhicule (1), le véhicule (1) comprenant une caméra de rétrovision latérale (C2) comportant un champ de vision (2) couvrant un environnement arrière latéral par rapport à un conducteur du véhicule (1), le véhicule (1) comprenant en outre une caméra de côté (C5) comportant un champ de vision (5) transversal par rapport au véhicule (1), un calculateur (7) et un afficheur (8), le procédé comprenant
- une étape d'affichage arrière (101), dans laquelle le calculateur (7) affiche sur une première zone (81) de l'afficheur (8) une vue (30) non déformée de la caméra de rétrovision latérale (C2) selon un premier facteur d'agrandissement et sur une deuxième zone (82) de l'afficheur (8) une vue (40) déformée de la caméra de rétrovision latérale (C2) selon un deuxième facteur d'agrandissement, différent du premier facteur d'agrandissement,
**caractérisé en ce que** le procédé comprend les étapes suivants:
- une étape de détection (102) dans laquelle le calculateur (7) détecte une condition de changement d'affichage,
- une étape d'affichage étendu (103), dans laquelle le calculateur (7) affiche sur la deuxième zone (82) de l'afficheur (8) une vue (50) de la caméra de côté (C5).

2. Procédé d'affichage selon la revendication précédente, la détection de condition de changement d'affichage correspondant à une détection d'une demande d'un utilisateur du véhicule (1).

3. Procédé d'affichage selon la revendication 1, la détection de condition de changement d'affichage correspondant à une détection d'intersection, par le véhicule (1).

4. Procédé d'affichage selon la revendication précédente, la détection d'intersection comprenant une reconnaissance par un capteur ou une détection par un dispositif de cartographie, d'une intersection routière (9), ou une reconnaissance par un capteur d'une cible (6) susceptible d'être localisée dans le champ de vision (5) de la caméra de côté (C5) dans un délai prédéterminé ou dans une distance prédéterminée.

5. Procédé d'affichage selon l'une quelconque des revendications précédentes, la détection de condition de changement d'affichage étant conditionnée à une probabilité de collision du véhicule (1) avec une cible (6).

6. Procédé d'affichage selon la revendication précédente, la probabilité de collision du véhicule (1) avec une cible (6) comprenant au moins un parmi un indice de confiance d'une cible (6) détectée par le véhicule (1), un temps à la collision entre le véhicule (1) et une cible (6) détectée par le véhicule (1), un taux d'accidentologie d'un lieu géographique comprenant l'environnement du véhicule (1).

7. Procédé d'affichage selon l'une quelconque des revendications précédentes, le calculateur (7) affichant, dans l'étape d'affichage étendu (103), une vue (50) déformée de la caméra de côté (C5).

8. Procédé d'affichage selon l'une quelconque des revendications précédentes, le procédé comprenant en outre une étape de signalisation (104) dans laquelle le calculateur (7) informe un utilisateur du véhicule (1) d'un changement d'affichage sur l'afficheur (8), par des moyens de signalisation.

9. Procédé d'affichage selon la revendication précédente, l'étape de signalisation (104) étant conditionnée à une détection d'un champ de vision de l'utilisateur excluant l'afficheur (8).

10. Véhicule (1) comprenant une caméra de rétrovision latérale (C2) comportant un champ de vision (2) couvrant un environnement arrière latéral par rapport à un conducteur du véhicule (1), le véhicule (1) comprenant en outre une caméra de côté (C5) comportant un champ de vision (5) transversal par rapport au véhicule (1), un calculateur (7) et un afficheur (8), le calculateur (7) étant apte à exécuter les étapes du procédé d'affichage selon l'une quelconque des revendications précédentes.

## Patentansprüche

1. Verfahren zur Anzeige einer Umgebung eines Fahrzeugs (1), wobei das Fahrzeug (1) eine seitliche Rücksichtkamera (C2) enthält, die ein Sichtfeld (2) aufweist, das eine rückwärtige Umgebung seitlich bezüglich eines Fahrers des Fahrzeugs (1) abdeckt, wobei das Fahrzeug (1) außerdem eine Seitenkamera (C5), die ein Sichtfeld (5) quer bezüglich des Fahrzeugs (1) aufweist, einen Rechner (7) und einen Anzeiger (8) enthält, wobei das Verfahren enthält:
- einen Schritt der rückseitigen Anzeige (101), in dem der Rechner (7) in einem ersten Bereich (81) des Anzeigers (8) eine nicht verformte Ansicht (30) der seitlichen Rücksichtkamera (C2) gemäß einem ersten Vergrößerungsfaktor und in einem zweiten Bereich (82) des Anzeigers (8) eine verformte Ansicht (40) der seitlichen Rücksichtkamera (C2) gemäß einem zweiten Vergrößerungsfaktor anders als der erste Vergrößerungsfaktor anzeigt,
**dadurch gekennzeichnet, dass** das Verfahren die folgenden Schritte enthält:
- einen Schritt der Erfassung (102), in dem der Rechner (7) eine Anzeigeänderungsbedingung erfasst,
- einen Schritt der erweiterten Anzeige (103), in dem der Rechner (7) im zweiten Bereich (82) des Anzeigers (8) eine Ansicht (50) der Seitenkamera (C5) anzeigt.

2. Anzeigeverfahren nach dem vorhergehenden Anspruch, wobei die Erfassung einer Anzeigeänderungsbedingung einer Erfassung einer Anforderung eines Benutzers des Fahrzeugs (1) entspricht.

3. Anzeigeverfahren nach Anspruch 1, wobei die Erfassung einer Anzeigeänderungsbedingung einer Erfassung einer Kreuzung durch das Fahrzeug (1) entspricht.

4. Anzeigeverfahren nach dem vorhergehenden Anspruch, wobei die Erfassung einer Kreuzung eine Erkennung durch einen Sensor oder eine Erfassung durch eine Kartographievorrichtung einer Straßenkreuzung (9), oder eine Erkennung durch einen Sensor eines Ziels (6) enthält, das sich in einer vorbestimmten Zeitspanne oder einem vorbestimmten Abstand im Sichtfeld (5) der Seitenkamera (C5) befinden kann.

5. Anzeigeverfahren nach einem der vorhergehenden Ansprüche, wobei die Erfassung einer Anzeigeänderungsbedingung von einer Kollisionswahrscheinlichkeit des Fahrzeugs (1) mit einem Ziel (6) abhängt.

6. Anzeigeverfahren nach dem vorhergehenden Anspruch, wobei die Kollisionswahrscheinlichkeit des Fahrzeugs (1) mit einem Ziel (6) mindestens eines unter einem Vertrauensindex eines vom Fahrzeug (1) erkannten Ziels (6), einer Zeit bis zur Kollision zwischen dem Fahrzeug (1) und einem vom Fahrzeug (1) erkannten Ziel (6), einer Unfallhäufigkeitsrate eines die Umgebung des Fahrzeugs (1) enthaltenden geographischen Orts enthält.

7. Anzeigeverfahren nach einem der vorhergehenden Ansprüche, wobei der Rechner (7) im Schritt der erweiterten Anzeige (103) eine verformte Ansicht (50) der Seitenkamera (C5) anzeigt.

8. Anzeigeverfahren nach einem der vorhergehenden Ansprüche, wobei das Verfahren außerdem einen Signalisierungsschritt (104) enthält, in dem der Rechner (T) einen Benutzer des Fahrzeugs (1) über eine Anzeigeänderung auf dem Anzeiger (8) durch Signalisierungseinrichtungen informiert.

9. Anzeigeverfahren nach dem vorhergehenden Anspruch, wobei der Signalisierungsschritt (104) von einer Erfassung eines Sichtfelds des Benutzers abhängt, das den Anzeiger (8) ausschließt.

10. Fahrzeug (1), das eine seitliche Rücksichtkamera (C2) enthält, die ein Sichtfeld (2) aufweist, das eine rückwärtige Umgebung seitlich bezüglich eines Fahrers des Fahrzeugs (1) abdeckt, wobei das Fahrzeug (1) außerdem eine Seitenkamera (C5), die ein Sichtfeld (5) quer bezüglich des Fahrzeugs (1) aufweist, einen Rechner (7) und einen Anzeiger (8) enthält, wobei der Rechner (Z) fähig ist, die Schritte des Anzeigeverfahrens nach einem der vorhergehenden Ansprüche auszuführen.

## Claims

1. Method for displaying an environment of a vehicle (1), the vehicle (1) comprising a lateral rear-view camera (C2) comprising a field of view (2) covering a lateral rear environment with respect to a driver of the vehicle (1), the vehicle (1) further comprising a side camera (C5) comprising a transverse field of view (5) with respect to the vehicle (1), a computer (7) and a display (8), the method comprising:
- a rear display step (101), in which the computer (7) displays a non-distorted view (30) from the lateral rear-view camera (C2) in a first zone (81) of the display (8) with a first magnification factor, and a distorted view (40) from the lateral rear-view camera (C2) in a second zone (82) of the display (8) with a second magnification factor, different from the first magnification factor, **characterized in that** the method comprises the following steps:
- a detection step (102) in which the computer (7) detects a display change condition,
- an extended display step (103), in which the computer (7) displays a view (50) from the side camera (C5) in the second zone (82) of the display (8) .

2. Display method according to the preceding claim, the detection of a display change condition corresponding to detection of a request from a user of the vehicle (1).

3. Display method according to Claim 1, the detection of a display change condition corresponding to detection of an intersection, by the vehicle (1).

4. Display method according to the preceding claim, the detection of an intersection comprising recognition by a sensor or detection by a mapping device of a road intersection (9), or recognition by a sensor of a target (6) likely to be located in the field of view (5) of the side camera (C5) within a predetermined period or within a predetermined distance.

5. Display method according to any one of the preceding claims, the detection of a display change condition being conditional upon a probability of collision of the vehicle (1) with a target (6).

6. Display method according to the preceding claim, the probability of collision of the vehicle (1) with a target (6) comprising at least one from among a confidence index for a target (6) detected by the vehicle (1), a time to collision between the vehicle (1) and a target (6) detected by the vehicle (1), an accident rate for a geographical location comprising the environment of the vehicle (1).

7. Display method according to any one of the preceding claims, the computer (7) displaying, in the extended display step (103), a distorted view (50) from the side camera (C5).

8. Display method according to any one of the preceding claims, the method further comprising a signalling step (104) in which the computer (7) informs a user of the vehicle (1) of a change in display on the display (8), by signalling means.

9. Display method according to the preceding claim, the signalling step (104) being conditional upon detection of a field of view of the user excluding the display (8).

10. Vehicle (1) comprising a lateral rear-view camera (C2) comprising a field of view (2) covering a lateral rear environment with respect to a driver of the vehicle (1), the vehicle (1) further comprising a side camera (C5) comprising a transverse field of view (5) with respect to the vehicle (1), a computer (7) and a display (8), the computer (7) being able to execute the steps of the display method according to any one of the preceding claims.
